# EUROPÄISCHE PATENTANMELDUNG

(11) **EP 2 409 906 A2**
(43) Veröffentlichungstag der Anmeldung: **25.01.2012**
(21) Anmeldenummer: 11173754.0
(22) Anmeldetag: 13.07.2011
(51) Int. Cl.: B62K 15/00

(54) **Faltrad**

(30) Priorität: 21.07.2010 EP 10170316
(71) Anmelder: Mies, Georg, 51688 Wipperfürth (DE)
(72) Erfinder: Mies, Georg, 51688 Wipperfürth (DE)
(74) Vertreter: OK pat AG

(57) **Zusammenfassung**

Faltrad (100) mit einer Vorderradgabel (6) mit Vorderrad (7), einem Rahmen, der eine obere Rahmenbasis (1), eine untere Rahmenbasis (2), ein Oberrohr (4) und eine Sitzstrebe (5) umfasst, die ein geschlossenes Polygon bilden, und der ein Sitzrohr (3) umfasst, dass sich diagonal ausgehend von der untere Rahmenbasis (2) durch das Polygon hindurch nach oben erstreckt, wobei ein Sattel (3.3) an einem oberen Ende des Sitzrohrs (3) und ein Hinterrad (8) im Bereich eines rückwärtigen Endes der unteren Rahmenbasis (2) befestigt ist, dadurch gekennzeichnet, dass im Bereich des Rahmens vier gelenkige Verbindungen vorgesehen sind, die einen zweistufigen Faltvorgang ermöglichen, bei dem in einem ersten Vorgang die obere Rahmenbasis (1) und das Oberrohr (4), sowie die untere Rahmenbasis (2) und die Sitzstrebe (5) zusammenführbar sind, und bei dem in einem zweiten Vorgang die untere Rahmenbasis (2) zusammen mit der Sitzstrebe (5) so umlegbar sind, dass das Hinterrad (8) eine Position neben dem Vorderrad (7) einnimmt.

## Beschreibung

### Gebiet der Erfindung

Es geht um ein neuartiges Falt- oder Klapprad gemäss Oberbegriff des unabhängigen Patentanspruchs.

Das Fahrrad hat trotz des weltweit zunehmenden PKW-Verkehrs nach wie vor eine große Bedeutung für die individuelle Mobilität. Insbesondere in Ballungszentren wird das Fahrrad häufig für kleine bis mittlere Distanzen eingesetzt.

Die kombinierte Nutzung des Fahrrads mit öffentlichen Verkehrsmitteln oder eines PKW bietet den Vorteil, auch größere Entfernungen überbrücken zu können und dabei unabhängig von den Einschränkungen bei der Nutzung des PKW oder der öffentlichen Verkehrsmittel zu sein. Dabei ist es allerdings erforderlich, die Transportfähigkeit des Fahrrads zu optimieren. Vorteilhaft ist dabei die Nutzung eines Faltrads. Das Faltrad hat außerdem den Vorteil, dass es beim Abstellen in der Wohnung oder auch am Arbeitsplatz wenig Platz in Anspruch nimmt.

Es gibt eine Vielzahl von Klapp- und Falträdern, die beim Transport sowie beim Abstellen weniger Platz in Anspruch nehmen als konventionelle Fahrräder. Üblicherweise haben die bekannten Lösungen aber gegenüber konventionellen Fahrrädern Nachteile im aufgebauten Zustand.

In DE000004313832A1, EP000001625068B1 und CA000002391163A1 sind Falträder beschrieben, die sich zwar auf ein relativ kleines Maß zusammenklappen lassen, aber bedingt durch die relativ kleinen Räder Nachteile im aufgebauten Zustand haben.

In EP000000634318B1 ist ein Faltrad beschrieben, dass sich auf ein kleines Maß zusammenklappen lässt, dessen Klappmechanismus aber relativ aufwändig in der Handhabung ist.

In EP000001068128B, EP000001069036B1, EP000001244587B1 und EP000000851825B1 sind Falträder beschrieben, die bedingt durch den Klappmechanismus eine deutlich schwächere Rahmenstruktur aufweisen, was sich beim Fahren nachteilig auswirkt.

In DE000003701803C2 ist ein Faltrad beschrieben, dass sich im aufgebauten Zustand nur unwesentlich von einem konventionellen Fahrrad unterscheidet, dass aber im zusammengeklappten Zustand immer noch relativ groß ist.

In EP000001801004A1 ist ein Faltrad beschrieben, dass sich im aufgebauten Zustand nur unwesentlich von einem konventionellen Fahrrad unterscheidet, dass aber einen aufwändigen Klappmechanismus hat und erst durch Demontage des Vorderrades auf ein kompaktes Maß gebracht werden kann.

In EP000001970296A1 ist ein Faltrad beschrieben, dass sich im zusammengeklappten Zustand wie ein Trolley schieben lässt, das aber bedingt durch die kleinen Räder und die instabile Rahmenkonstruktion nicht die Fahreigenschaften eines vollwertigen Fahrrads aufweist.

Ziel der Erfindung ist es daher, ein Faltrad zu entwickeln, dass im aufgebauten Zustand vergleichbare Eigenschaften wie ein konventionelles Fahrrad aufweist.

Ein weiteres Ziel der Erfindung ist, dass eine Rahmenkonstruktion bereit gestellt werden soll, die eine hohe Steifigkeit bei geringem Gewicht aufweist.

Ein weiteres Ziel der Erfindung ist, dass sich das Faltrad auf ein möglichst kleines Maß zusammenfalten lassen soll.

Ein weiteres Ziel der Erfindung ist, die Konstruktion so auszuführen, dass der entsprechende Klappmechanismus sehr leicht und schnell zu handhaben ist.

Ein weiteres Ziel der Erfindung ist, die Konstruktion so auszuführen, dass sich alle gängigen Gangschaltungen ohne Einschränkung einsetzen lassen.

Ein weiteres Ziel der Erfindung ist, die Konstruktion so auszuführen, dass sich das Fahrrad im geklappten Zustand leicht mit Hilfe der vorhandenen Räder rollen oder schieben lässt, und somit nur in Ausnahmefällen getragen werden muss.

Gemäss Erfindung wurde daher ein Gesamtaufbau gewählt, der sich nicht grundlegend von einem konventionellen Fahrrad unterscheidet und es werden keine Räder mit kleinem Durchmesser verwendet.

Gemäss Erfindung kommt als Rahmenkonstruktion ein Diamantrahmen zum Einsatz. Es handelt sich dabei um eine Fachwerkkonstruktion aus einem Trapez für den Hauptrahmen und einem doppelten Dreieck für den Hinterbau ("Diamant" ist eine falsche Übersetzung von *diamond,* was auch Raute bedeutet und die Rahmenform beschreibt). In vielen Fällen berühren Ober- und Unterrohr an derselben Stelle den Steuerkopf, sodass das Trapez zum Dreieck wird.

Der Diamantrahmen hat den Vorteil, dass die Streben fast nur auf Zug bzw. Druck beansprucht werden und kaum auf Torsion oder Biegung. Deshalb ist er ausgesprochen steif bei gleichzeitig geringem Gewicht. Der Diamantrahmen ist wegen seiner vorteilhaften Eigenschaften seit über 100 Jahren die am häufigsten verwendete Rahmenform bei Fahrrädern, insbesondere bei Herrenrädern mittlerweile aber auch bei sogenannten Unisex-Rädern.

Im zusammengefalteten Zustand begrenzen vor allem die Abmessungen der Räder das mögliche kleinste Packmaß. Es wurde ein neuer Faltmechanismus entwickelt, bei dem das kleinste Packmaß nicht wesentlich größer ist als ein Quadrat mit der Kantenlänge des Raddurchmessers.

Gemäss Erfindung kommen möglichst wenige Verbindungen zum Einsatz, die gelöst werden müssen. Ein Zerlegen des Faltrades in mehrere Teile ist bei der Erfindung nicht notwendig.

Bei einer bevorzugten Ausführungsform der Erfindung ist die Verbindung zwischen Tretlager und Hinterradlager über die Kettenstreben so gestaltet, dass der komplette Antriebsstrang bestehend aus Tretlager, Pedalen, vorderem Zahnkranz, Kette, Kettenstreben, Hinterradlager, Hinterrad, hinterem Zahnkranz und Schaltung in seiner Anordnung beim Faltvorgang unverändert erhalten bleibt.

Bei einer bevorzugten Ausführungsform der Erfindung sind im zusammengefalteten Zustand die beiden Räder exakt nebeneinander angeordnet sind so dass sie eine gemeinsame virtuelle Achse bilden.

### ZEICHNUNGEN

Weitere Einzelheiten und Vorteile der Erfindung werden im Folgenden anhand von Ausführungsbeispielen und mit Bezug auf die Zeichnung beschrieben.
- FIG. 1A: zeigt das Faltrad im aufgebauten, fahrbereiten Zustand in einer Seitenansicht;
- FIG. 1B: zeigt in einer stark schematisierten Ansicht die Polygonform des Rahmens mit diagonal verlaufendem Sitzrohr und mit vier Gelenken;
- FIG. 2: zeigt eine Detailansicht eines Verschlusses;
- FIG. 3: zeigt eine Detailansicht eines zentralen Gelenks;
- FIG. 4: zeigt das Faltrad im aufgebauten, fahrbereiten Zustand in einer Schrägansicht;
- FIG. 5: zeigt eine Detailansicht eines Teils des Faltrads ohne Räder im zusammengefalteten Zustand;

- FIG. 6: zeigt eine Detailansicht eines Teils des Faltrads ohne Räder nachdem der Verschluss geöffnet und das Sitzrohr etwas nach vorne geschwenkt wurde;
- FIG. 7: zeigt eine Detailansicht eines Teils des Faltrads ohne Räder nachdem das zentrale Gelenk abgeklappt wurde;
- FIG. 8: zeigt eine Detailansicht eines Teils des Faltrads ohne Räder in einem Zwischenzustand;
- FIG. 9: zeigt eine Detailansicht eines Teils des Faltrads ohne Räder in einem Zwischenzustand;
- FIG. 10: zeigt eine Detailansicht eines Teils des Faltrads ohne Räder in einem Zwischenzustand;
- FIG. 11: zeigt eine Detailansicht eines Teils des Faltrads ohne Räder in einem Zwischenzustand;
- FIG. 12: zeigt eine Detailansicht eines Teils des Faltrads ohne Räder in einem Zwischenzustand;
- FIG. 13: zeigt das Faltrad mit allen Komponenten im gefalteten Zustand von schräg hinten, wobei der Lenker noch nicht zusammengefaltet wurde;
- FIG. 14: zeigt das Faltrad mit allen Komponenten im gefalteten Zustand von schräg hinten, wobei auch der Lenker zusammengefaltet wurde;
- FIG. 15: zeigt das Faltrad mit allen Komponenten im gefalteten Zustand von der Seite, wobei auch der Lenker zusammengefaltet wurde;
- FIG. 16: zeigt das Faltrad mit allen Komponenten im gefalteten Zustand schräg von vorne, wobei auch der Lenker zusammengefaltet wurde;
- FIG. 17: zeigt eine Detailansicht einer möglichen Ausführungsform eines Lenkers des Faltrads;
- FIG. 18: zeigt eine Detailansicht des Lenkers nach Fig. 17 nachdem ein Lenkerrohr abgeklappt wurde;
- FIG. 19: zeigt eine Detailansicht des Lenkers nach Fig. 17 nachdem beide Lenkerrohre abgeklappt wurden.
Im Folgenden werden Details einer besonders bevorzugten Ausführungsform der Erfindung beschrieben.

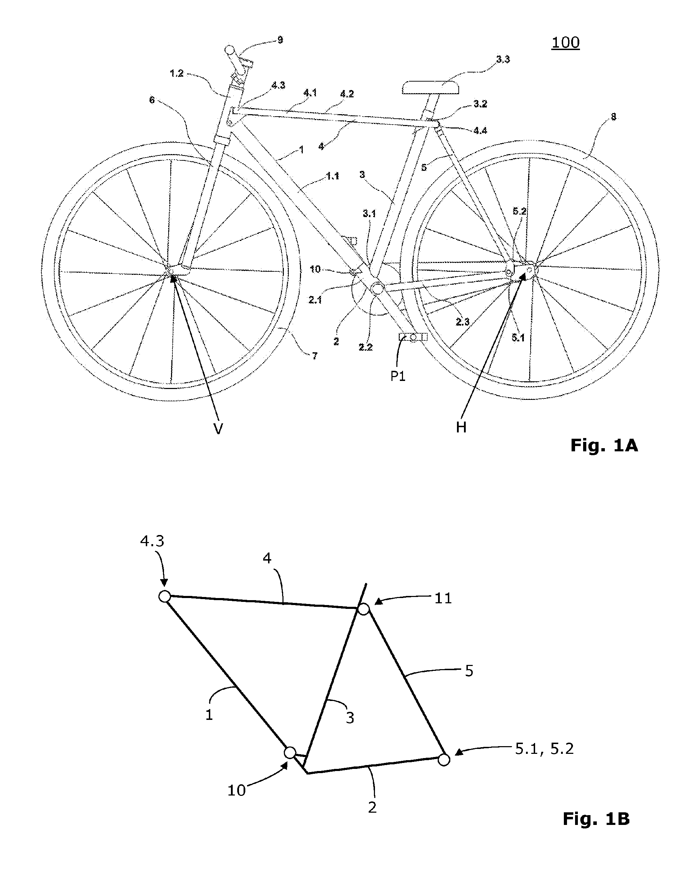

Fig. 1A zeigt das Faltrad 100 im aufgebauten, fahrbereiten Zustand. Der eigentliche Rahmen ist als Diamantrahmen ausgeführt. Der Rahmen umfasst die folgenden Elemente, die gelenkig miteinander verbunden sind:
- obere Rahmenbasis 1,
- untere Rahmenbasis 2,
- Sitzrohr 3,
- Oberrohr 4, und
- Sitzstrebe 5.

Die obere Rahmenbasis 1 umfasst den oberen Teil des Unterrohrs 1.1 und eine Lenkkopflagerung 1.2. Die untere Rahmenbasis 2 umfasst den unteren Teil des Unterrohrs 2.1, die Tretlagerung 2.2 und die Kettenstrebe 2.3.

Die obere Rahmenbasis 1 und die untere Rahmenbasis 2 sind über ein zentrales Gelenk 10 miteinander verbunden. Dieses Gelenk 10 ist so angeordnet, dass es in etwa den gleichen Abstand (vorzugsweise exakt den gleichen Abstand) zur Hinterachse H und zur Vorderachse V hat. Es ist zu beachten, dass das Gelenk 10 nicht am Tretlager sitzt, sondern in Richtung zum Lenker 9 hin verschoben ist.

Das Oberrohr 4 ist asymmetrisch einstrebig oder vorzugsweise symmetrisch doppelstrebig ausgeführt. Bei der doppelstrebigen Ausführungsform, die in den Figuren gezeigt ist, sind zwei parallele Streben 4.1 und 4.2 am vorderen Ende durch ein Verbindungselement 4.3 und am hinteren Ende durch ein Verbindungselement 4.4 fest miteinander verbunden. Die beiden Streben 4.1 und 4.2 sind außen am Sitzrohr 3 vorbeigeführt, d.h. das Sitzrohr 3 kann sich beim Zusammenfalten innen zwischen den beiden Streben 4.1 und 4.2 hindurch bewegen. Bei einer einstrebigen Ausführungsform ist das Sitzrohr 3 außen an dem einstrebigen Oberrohr 4 vorbeigeführt.

Das Oberrohr 4 ist vorne über das Verbindungselement 4.3 gelenkig an der oberen Rahmenbasis 1 befestigt. Am hinteren Ende ist das Oberrohr 4 über das Verbindungselement 4.4 mit dem Klemmverschluss 3.2 am Sitzrohr 3 so verbunden, dass es beim Öffnen des Klemmverschluss 3.2 gelöst werden kann.

Die Sitzstrebe 5 bildet die Verbindung zwischen dem Oberrohr 4 und der Rahmenbasis 2. Die Sitzstrebe 5 ist am unteren Ende über die beiden Gelenke 5.1 und 5.2 mit der Kettenstrebe 2.3, die Teil der Rahmenbasis 2 ist, verbunden. Vorzugsweise kommt hier eine gabelförmige Sitzstrebe 5 zum Einsatz, wie in den Figuren gezeigt.

FIG. 1B zeigt in einer stark schematisierten Ansicht die Polygonform des Rahmens mit diagonal verlaufendem Sitzrohr 3. Der Rahmen, der die obere Rahmenbasis 1, die untere Rahmenbasis 2, das Oberrohr 4 und die Sitzstrebe 5 umfasst, bildet ein Polygon, das in sich geschlossen ist. Der Rahmen umfasst weiterhin das Sitzrohr 3, das sich diagonal ausgehend von der unteren Rahmenbasis 2 durch das Polygon hindurch nach oben erstreckt, wobei ein Sattel 3.3 an einem oberen Ende des Sitzrohrs 3 befestigt ist. Ausserdem sind vier Gelenke 4.3, 5.1, 5.2, 10 und 11 vorgesehen, deren ungefähre Position in Fig. 1B durch Kreise angedeutet ist.

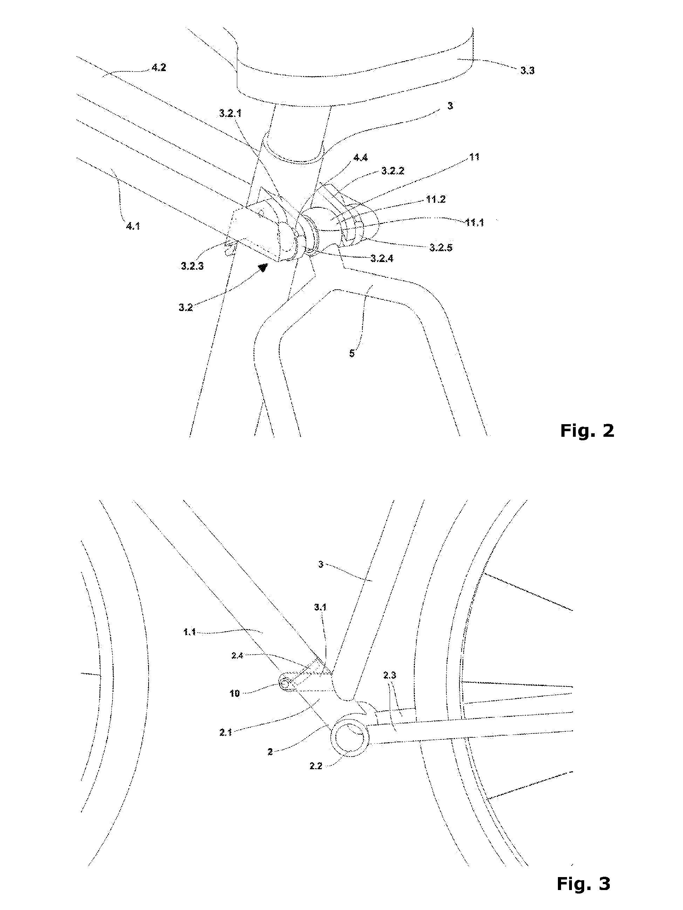

Fig. 2 zeigt Details eines Verschlusses 3.2 des Faltrads 100, der im Bereich unterhalb eines Sattels 3.3 angeordnet ist. Der Verschluss besteht aus den beiden fest am Sitzrohr 3 befestigten gabelförmigen Aufnahmeelementen 3.2.1 und 3.2.2 und dem beweglich am Sitzrohr 3 befestigten Hebel 3.2.3 mit den beiden krallenförmigen Enden 3.2.4 und 3.2.5. Bei geschlossenem Verschluss sitzt das Verbindungselement 4.4 in den gabelförmigen Aufnahmeelementen 3.2.1 sowie 3.2.2 und wird von den beiden krallenförmigen Enden 3.2.3 und 3.2.4 des Hebels 3.2.3 dort fixiert.

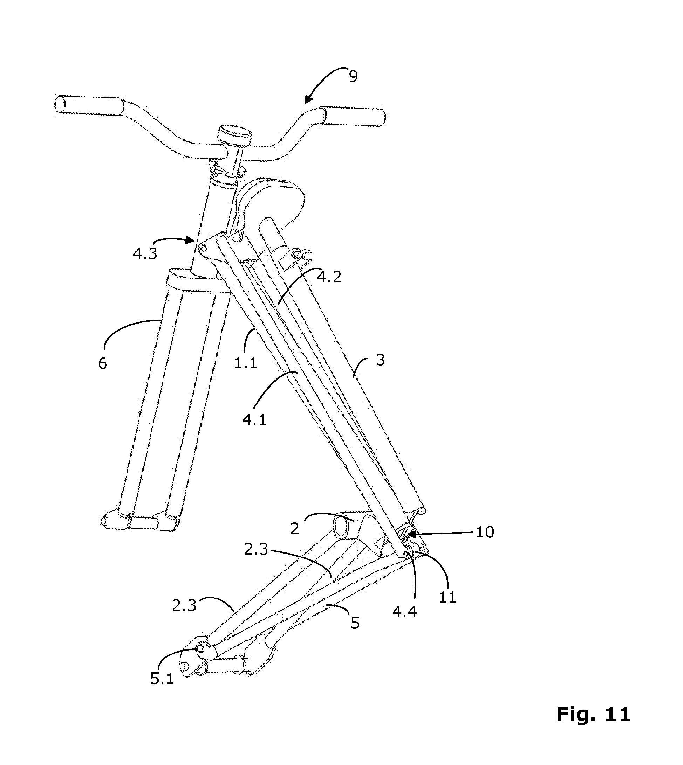

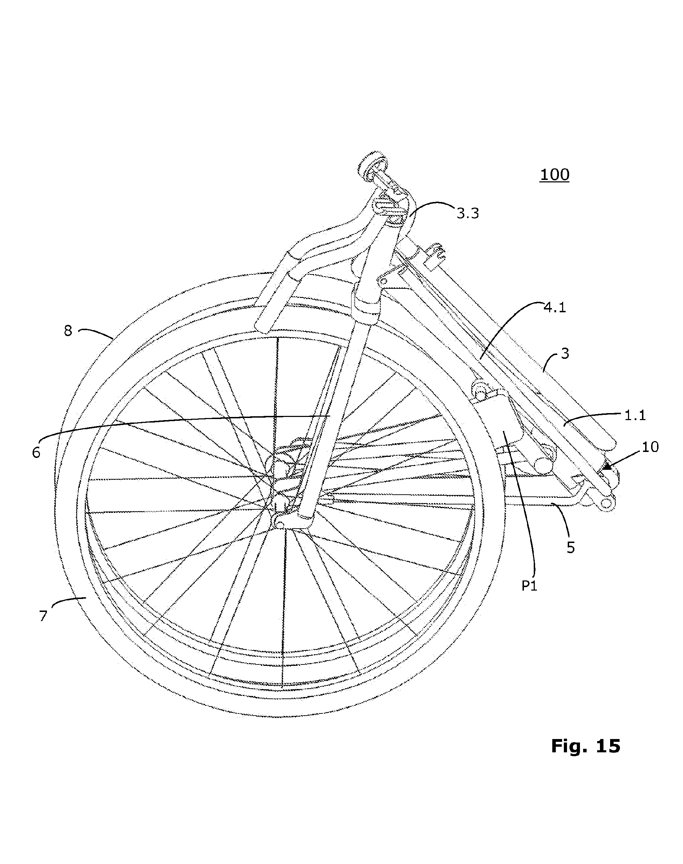

In den Figuren 11 bis 15 ist der Verschluss ohne den Hebel 3.2.3 dargestellt so dass man die beiden Aufnahmeelemente 3.2.1 und 3.2.2 gut erkennen kann. In der Mitte des Verbindungselements 4.4 sitzt ein Kugelgelenk 11, bestehend aus einer fest im Verbindungselement 4.4 integrierten inneren Kugel 11.1 und einer beweglichen äußeren Pfanne 11.2. Die äußere Pfanne 11.2 ist mit dem oberen Ende der gabelförmigen Sitzstrebe 5 verbunden. Das Kugelgelenk 11 bildet somit die Verbindung zwischen dem Oberrohr 4 und der Sitzstrebe 5.

Anstelle des Kugelgelenks 11 kann auch eine andere zug- und drucksteife Verbindung verwendet werden, mit der die Torsion und der Winkel zwischen Oberrohr 4 und Sitzstrebe 5 ausgeglichen werden kann, z.B. eine Kombination aus mehreren Drehgelenken oder ein Festkörpergelenk. Möglich wäre auch anstelle der gabelförmigen Sitzstrebe 5 zwei Streben zu verwenden, die mit jeweils einem eigenem Gelenk direkt an den beiden Streben 4.1 und 4.2 befestigt wären. In diesem Fall genügen zwei einfache Gelenke, die Torsion könnte durch eine zulässige Verwindung des doppelstrebigen Oberrohrs ausgeglichen werden.

FIG. 3 zeigt Details des zentralen Gelenks 10 des Fahrrads 100. Das Sitzrohr 3 ist, wie in Fig. 3 gezeigt, am unteren Ende über einen Ausleger 3.1 ebenfalls an dem zentralen Gelenk 10 befestigt. Zusätzlich stützt sich das Sitzrohr 3 an dem unteren Teil des Unterrohrs 2.1 ab.

Eine vergleichbare Funktion lässt sich auch erreichen, wenn das Sitzrohr 3 ein eigenes Gelenk hätte.

Im aufgebauten, fahrbereiten Zustand sind die obere Rahmenbasis 1, die untere Rahmenbasis 2, die Sitzstrebe 5 und das Oberrohr 4 über die diagonale Verbindung durch das Sitzrohr 3 vorgespannt. Um dies zu erreichen, ist der Klemmverschluss 3.2 so weit oben am Fahrrad 100 angeordnet, dass beim Befestigen des Verbindungselements 4.4 eine Druckspannung auf das Sitzrohr 3 sowie eine Zugspannung auf das Oberrohr 4 und die Sitzstrebe 5 entstehen.

Die beiden Teile des Unterrohrs 1.1 und 2.1 werden an der Schnittstelle von 1.1 und 2.1 über eine innere Zentrierung 2.4 fixiert. Durch die Verspannung, die auf die Schnittstelle zwischen 1.1 und 2.1 und die innere Zentrierung 2.4 wirkt, wird ohne einen zusätzlichen Verschluss an dieser Verbindungsstelle, d.h. im Bereich des zentralen Gelenks 10, eine spielfreie und verwindungssteife Verbindung erreicht. Außerdem wird durch die Vorspannung der gesamte Rahmen in sich versteift. Der Rahmen erhält dadurch bezüglich seiner Verwindungssteifigkeit nahezu die gleichen Eigenschaften wie ein verschweißter Rahmen.

Anhand der folgenden Figuren wird nun der Faltvorgang beschrieben.

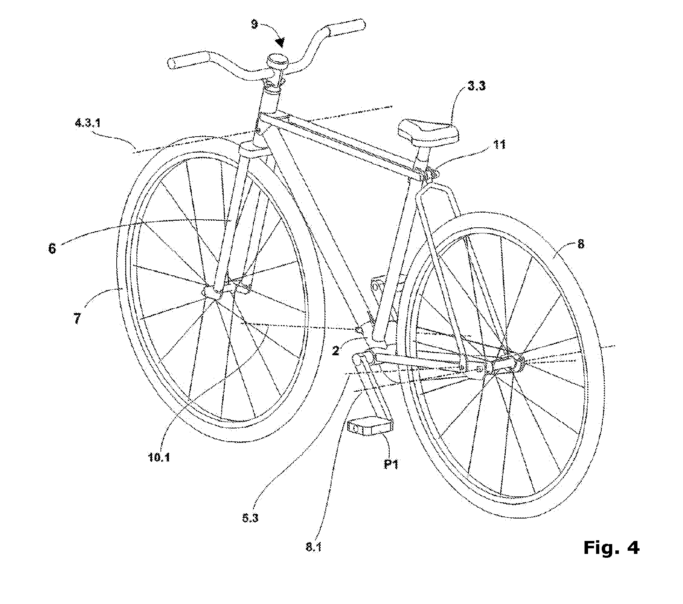

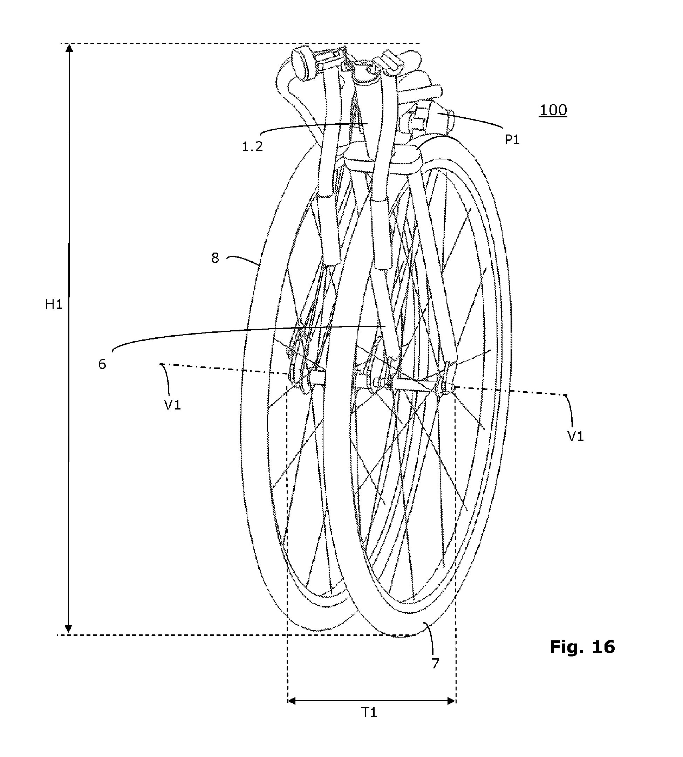

Fig. 4 zeigt das Faltrad 100 im aufgebauten, fahrbereiten Zustand in einer Schrägansicht. Die Achsausrichtung 10.1 des zentralen Gelenks 10 ist gegenüber der Radachse 8.1 (entspricht der Hinterradachse H in Fig. 1A) so versetzt (schräg gestellt), dass die Rahmenbasis 2 nach dem vollständigen Faltvorgang seitlich neben der Vorderradgabel 6 steht. Bei entsprechend leicht verdrehter Gabel 6 liegen die Vorderradachse 7.1 (entspricht der Vorderradachse V in Fig. 1A) und die Hinterradachse 8.1 im gefalteten Zustand dadurch in einer Flucht und bilden somit eine gemeinsame virtuelle Achse V1 (siehe z.B. Fig. 16).

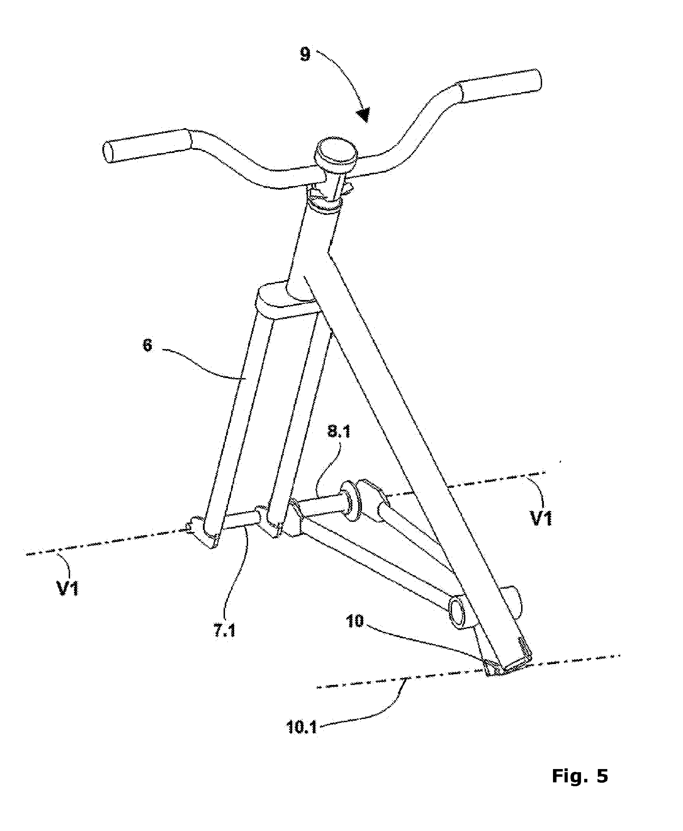

Dieser Zustand ist in Fig. 5 wegen der besseren Übersichtlichkeit ohne Räder 7, 8, Sitzrohr 3, Sitzstrebe 5 und Oberrohr 4 dargestellt.

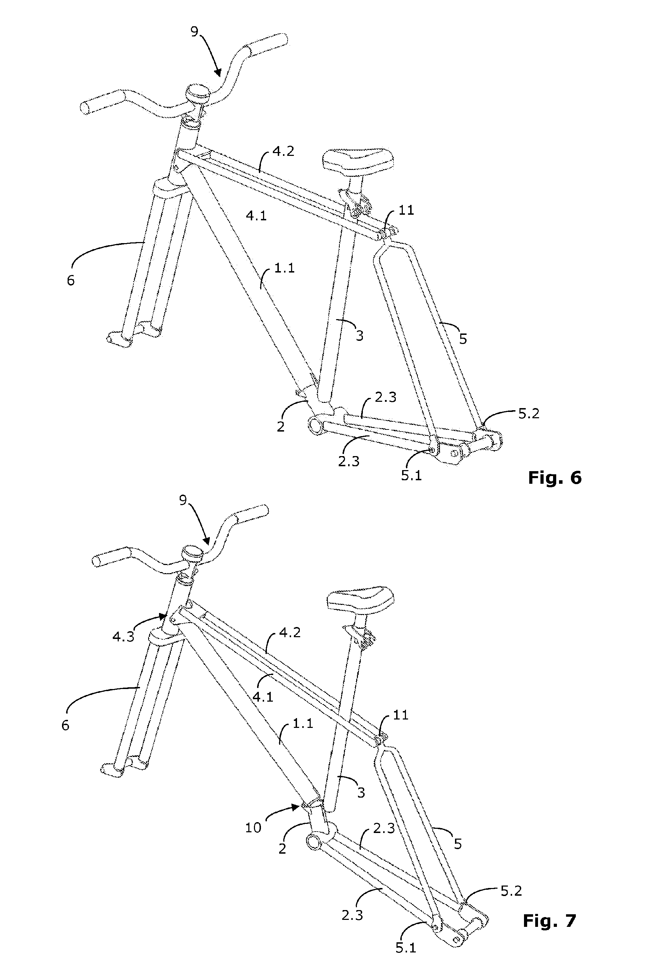

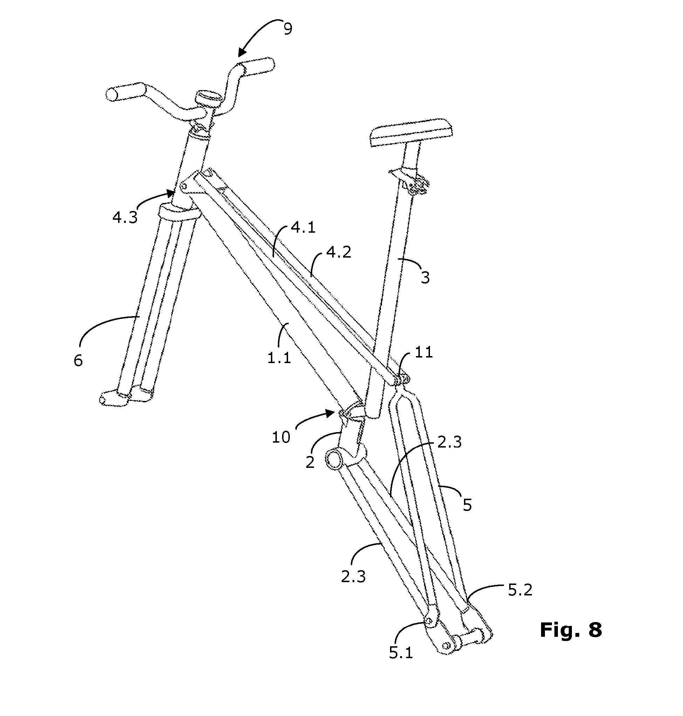

In den Figuren 6 - 8 sind die einzelnen Phasen des Faltvorgangs wegen der besseren Übersichtlichkeit ohne Räder 7, 8 gezeigt. Die einzelnen Phasen sind wie folgt:
Fig. 6: Der Verschluss 3.2 wird geöffnet und das Sitzrohr 3 etwas nach vorne geschwenkt.

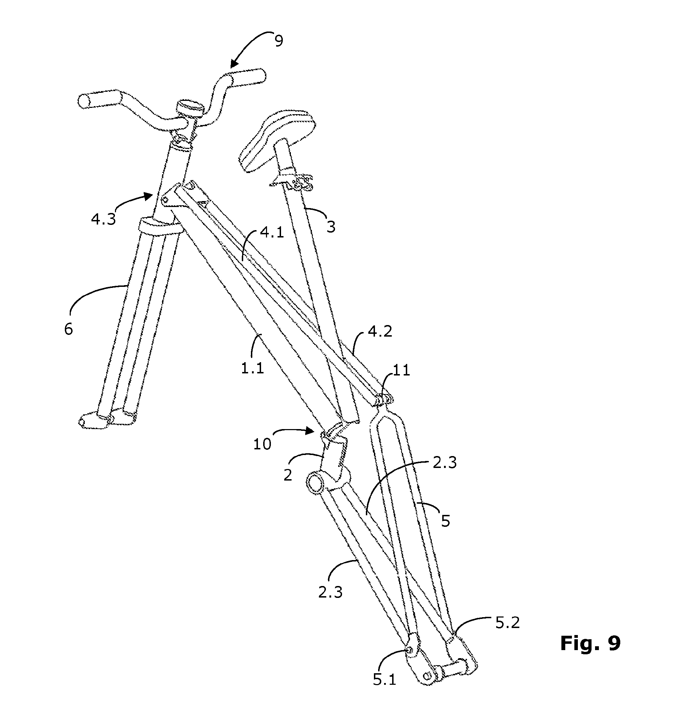

Fig. 7 bis 9: Die Rahmenbasis 2 wird ausgehend von der Ausgangssituation um 180 Grad geschwenkt. Die verschiedenen Stellungen der einzelnen Elemente zueinander während des Schwenkvorgangs sind in den Figuren 7 - 9 zu erkennen.

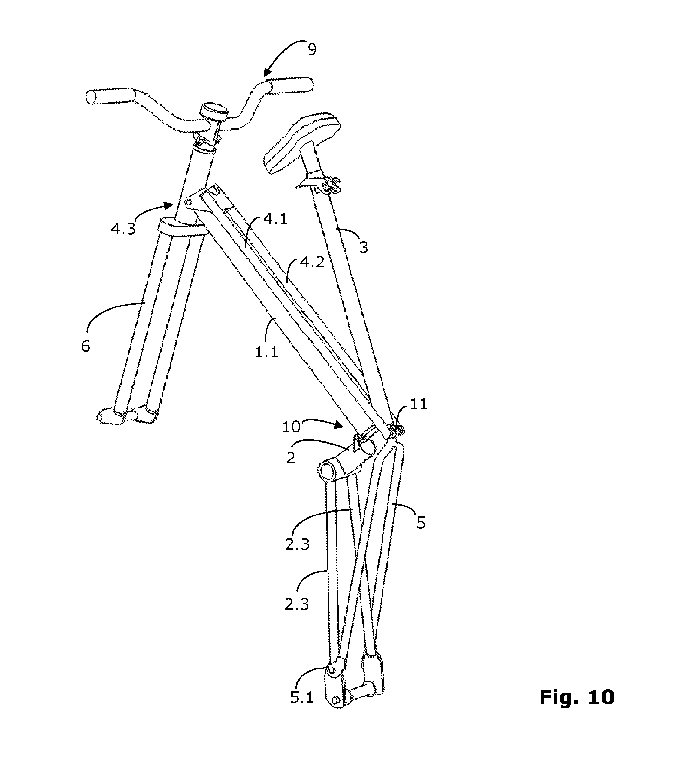

In Fig. 10 ist ein weiterer Zwischenschritt des Faltvorgangs gezeigt. Die Gabel 6 wurde geringfügig nach rechts gedreht, um zu gewährleisten, dass das Hinterrad 8 am Vorderrad 7 (nicht in diesen Figuren gezeigt) vorbei geschwenkt werden kann.

In Fig. 11 ist ein weiterer Zwischenschritt des Faltvorgangs gezeigt. Das hintere Verbindungselement 4.4 des Oberrohrs 4 schwenkt unterhalb des Gelenks 10 am Basiselement 1 und Basiselement 2 und der Sitzstange 3 vorbei.

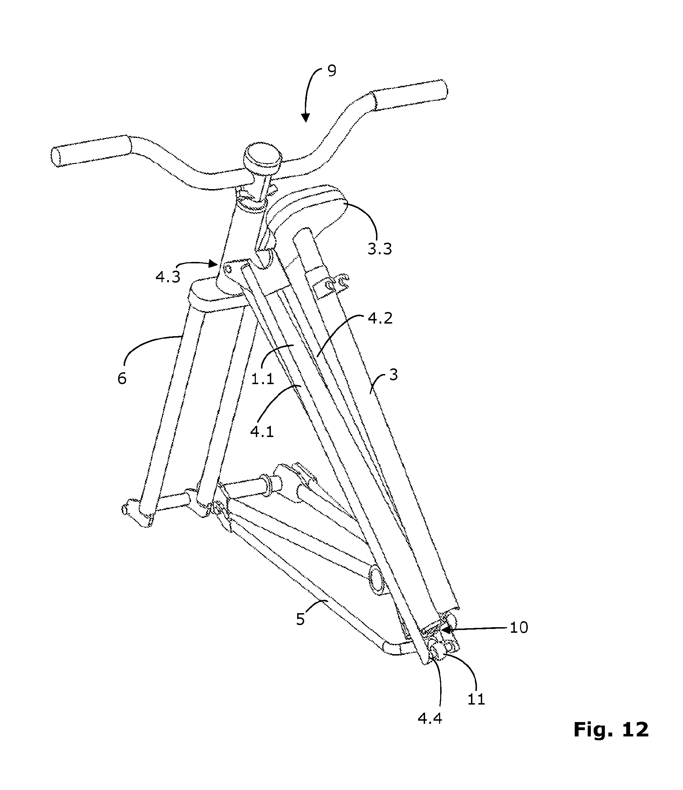

In Fig. 12 ist ein weiterer Zwischenschritt des Faltvorgangs gezeigt. Die Hinterradachse 8.1 befindet sich nun genau neben der Vorderradachse 7.1. Beide Räder 7, 8 (nicht in diesen Figuren gezeigt) bilden eine gemeinsame virtuelle Achse V1 (siehe z.B. Fig. 16). Das Sitzrohr 3 wird anschließend komplett nach vorne geschwenkt.

Das Sitzrohr 3 ist ebenfalls über das zentrale Gelenk 10 mit der Rahmenbasis 1 und der Rahmenbasis 2 verbunden (siehe Fig. 3). Durch die Achsausrichtung des Gelenks 10 (siehe Bezugszeichen 10.1 in Fig. 4) wird das Sitzrohr 3 beim Schwenken seitlich so versetzt, dass sich der Sattel 3.3 seitlich neben dem Lenkkopflager 1.2 befindet, wie in Fig. 12 zu erkennen.

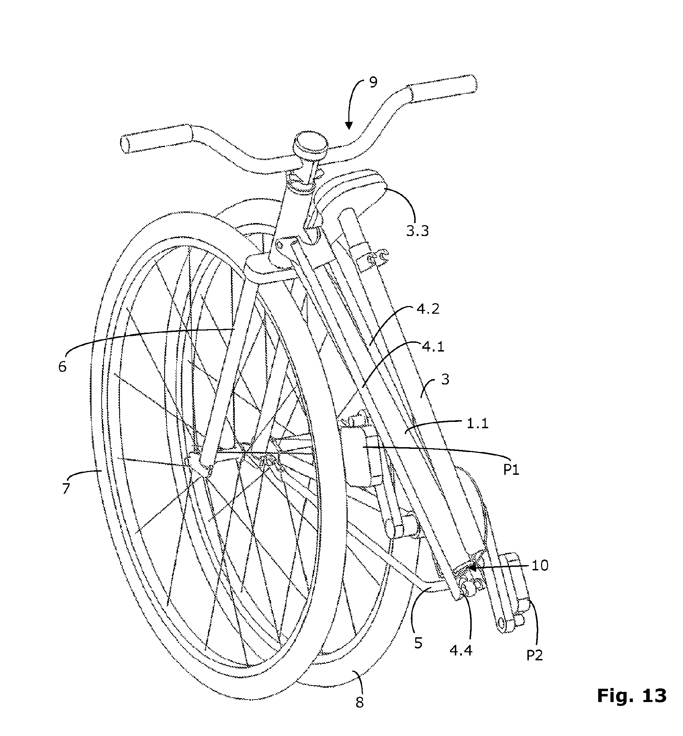

Fig. 13 zeigt das Faltrad 100 mit allen Komponenten im gefalteten Zustand. Die Pedale P1, P2 sind angeklappt. Der dazu erforderliche Klappmechanismus ist Stand der Technik.

Im Folgenden wird die Ausrichtung der Gelenke beschrieben, da deren Ausrichtung für den Faltvorgang wesentlich ist.

Beim Faltvorgang schwenkt die Rahmenbasis 2 um die Achse 10.1 des zentralen Gelenks 10. Da die Achse 10.1 nicht parallel zur Radachse 8.1 ist (siehe Fig. 4), bewegt sich die Hinterachse H auf einem Kreisbogen, der nicht in der Rahmenebene A liegt. Die Rahmenebene A liegt senkrecht zur Radachse 8.1 und geht mittig durch den Rahmen.

Das Kugelgelenk 11 bewegt sich beim Faltvorgang auf einem Kreisbogen in der Rahmenebene A, da die Achse 4.3.1 (siehe Fig. 4) parallel zur Radachse 8.1 ist. Die Sitzstrebe 5 bewegt sich somit beim Faltvorgang am oberen Ende, also am Kugelgelenk 11 auf einem Kreisbogen in der Rahmenebene A und am unteren Ende, also im Zentrum von Gelenk 5.1 und 5.2 auf einem Kreisbogen, der nicht in der Rahmenebene A liegt.

Dadurch ergibt sich die Achsrichtung 5.3 für die beiden Gelenke 5.1 und 5.2 so wie in Fig. 4 gezeigt. Die Verwindung zwischen der Sitzstrebe 5 und dem Verbindungselement 4.4, die beim Faltvorgang entsteht, wird durch das Kugelgelenk 11 ausgeglichen.

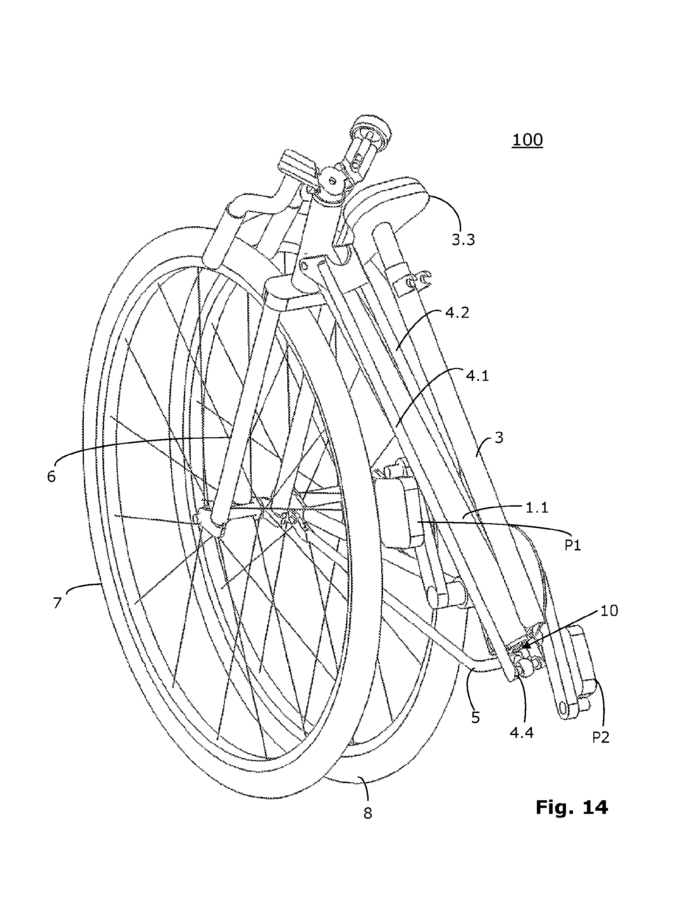

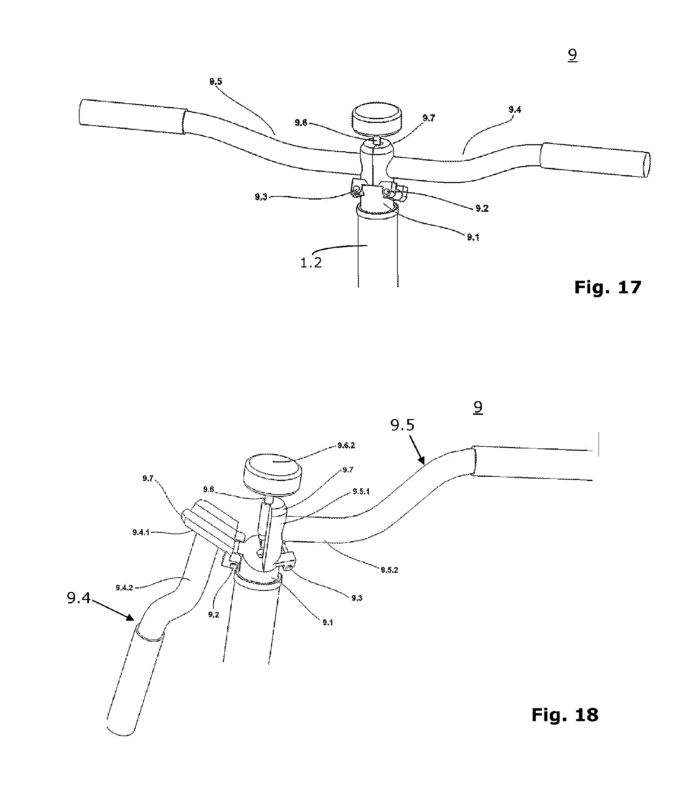

In den Figuren 14, 15 und 16 ist das komplett gefaltete Faltrad 100 in verschiedenen Ansichten gezeigt. In diesen Ansichten ist zu erkennen, dass auch der Lenker 9 zusammengefaltet wurde. Das Zusammenfalten des Lenkers 9 ist optional und kann z.B. gemäss der Figuren 17 - 19 erfolgen.

Optional kann der Lenker 9 einem Faltvorgang unterzogen werden, wie bereits angedeutet. Zu diesem Zweck kann der Lenker 9 folgende Elemente umfassen:
- Lenkerbasis 9.1,
- linkes Gelenk 9.2,
- rechtes Gelenk 9.3,
- linkes Lenkerrohr 9.4,
- rechtes Lenkerrohr 9.5, und
- Fixierschraube 9.6.

Fig. 17 zeigt den Lenker 9 von vorne mit einer bereits gelösten Fixierschraube 9.6. Die Fixierschraube 9.6 sitzt in einem senkrechten Abschnitt des Lenkers 9. Dieser Abschnitt ist in der Verlängerung der Lenkkopflagerung 1.2 angeordnet.

Fig. 18 zeigt den Lenker 9 von hinten mit gelöster Fixierschraube 9.6. Eines der Lenkerrohre 9.4 wurde bereits abgeklappt.

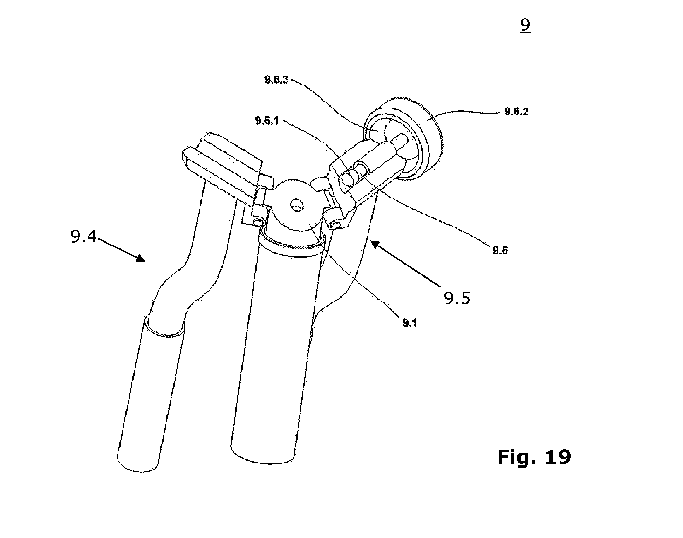

Fig. 19 zeigt den Lenker 9 von hinten mit gelöster Fixierschraube 9.6. Beide Lenkerrohre 9.4 und 9.5 wurde nun abgeklappt.

Das linke Lenkerrohr 9.4 umfasst vorzugsweise einen halbzylindrischen Teil 9.4.1 und ein dazu im Winkel angeordnetes Lenkerende 9.4.2.

Das rechte Lenkerrohr 9.5 umfasst vorzugsweise einen halbzylindrischen Teil 9.5.1 und ein dazu im Winkel angeordnetes Lenkerende 9.5.2.

Die beiden halbzylindrischen Teile 9.4.1 und 9.5.1 bilden im nicht gefalteten Zustand (d.h. im Normalzustand) einen Zylinder mit dem gleichen Durchmesser und der gleichen Achse wie die Lenkerbasis 9.1. Dieser Zylinder hat vorzugsweise einen Konus 9.7 am oberen Ende.

Die beiden Lenkerrohre 9.4 und 9.5 sind vorzugsweise über die Gelenke 9.2 und 9.3 mit der Lenkerbasis 9.1 verbunden.

Mittig zwischen den beiden halbzylindrischen Teilen 9.4.1 und 9.5.1 ist die Fixierschraube 9.6 angeordnet, die am unteren Ende mit einem Gewinde 9.6.1 (siehe Fig. 19) in der Lenkerbasis 9.1 verschraubt ist.

Die am oberen Ende der Fixierschraube 9.6 angeordnete Fixierscheibe 9.6.2 ist innen ebenfalls konisch ausgeführt. Dieser Innenkonus 9.6.3 zentriert sich auf dem Konus 9.7 der beiden Halbzylinder 9.4.1, 9.5.1.

Die beiden halbzylindrischen Teile 9.4.1 und 9.5.1 werden durch die Kraft, die über den Innenkonus 9.6.3 auf den Konus 9.7 wirkt, zusammengedrückt. Gleichzeitig werden diese beiden Teile 9.4.1 und 9.5.1 durch die Kraft, die durch die Fixierschraube 9.6 axial wirkt, an die Lenkerbasis 9.1 gedrückt. Durch die Verbindung an den Gelenken 9.2 und 9.3 ist darüber hinaus eine Verdrehung der Teile 9.4 und 9.5 gegenüber der Lenkerbasis 9.1 um die Lenkerachse gesperrt. Bei festgezogener Fixierschraube 9.6 erreicht man dadurch eine feste, formschlüssige, verdrehsteife Verbindung zwischen der Lenkerbasis 9.1 und den beiden Lenkerrohren 9.4 und 9.5.

Der beschriebene Lenker 9 kann auch auf anderen Fahrrädern zum Einsatz kommen. Er erlaubt das Wegklappen der Lenkerrohre 9.4 und 9.5. Nach dem Wegklappen kann ein solches Fahrrad einfacher in einem Durchgang oder einem anderweitig beengten Raum untergebracht werden.

Basierend auf der beschriebenen Lenkerlösung lässt sich auch ein Sicherheitsmechanismus realisieren, der ein unbefugtes Benutzen des Faltrads 100 oder eines anderen Fahrrads , das mit einem solchen Lenker 9 ausgestattet ist, verunmöglicht. In einer einfachen Ausführungsform des Sicherheitsmechanismus wird die Fixierschraube 9.6 abnehmbar ausgeführt. In diesem Fall klappt man den Lenker 9 nach unten, wie in Fig. 19 gezeigt und man entfernt dann die Fixierschraube 9.6. Ein Dritter, der das Fahrrad nun entwenden möchte, kann das Fahrrad ohne Fixierschraube 9.6 nicht lenken und daher auch nicht benutzen.

Eine andere Ausführungsform des Sicherheitsmechanismus basiert darauf, dass die Fixierschraube 9.6 abgenommen und dann mit einem Schloss so verriegelt werden kann, dass der Lenker 9 nicht benutzt werden kann. In diesem Fall kann auch keine Ersatzfixierschraube 9.6 verwendet werden, da das Verriegeln so erfolgt, dass z.B. der Zugang zu der Öffnung in der Lenkerbasis 9.1 blockiert ist.

Das Faltrad 100 lässt sich im gefalteten Zustand natürlich tragen, aber auch komfortabel rollen. Da die beiden Räder 7, 8 im zusammengefalteten Zustand exakt parallel nebeneinander angeordnet sind und eine gemeinsame virtuelle Achse V1 bilden, wie in Fig. 16 gezeigt, kann das Fahrrad 100 im gefalteten Zustand wie bei einem Trolley gerollt werden. Dazu wird der gefaltete Rahmen in Bezug zu den Rädern 7, 8 nach oben verdreht. Diese Anordnung ist in Fig. 16 dargestellt. Hierbei erkennt man gut die sehr kompakten Abmessungen und die absolut parallele Anordnung der Räder 7, 8 im gefalteten Zustand.

Im gefalteten Zustand ergeben sich Gesamtabmessungen (falls auch der Lenker 9 zusammengefaltet wurde), die sich in der Vertikalebene im Wesentlichen aus dem Durchmesser der Räder 7, 8 zuzüglich des Oberbaus aus Lenkkopflagerung 1.2. und den anderen Elementes des Lenkers 9, sowie dem Sattel 3.3 ergeben. Die Höhe H1 (siehe Fig. 16) beträgt bei einem Faltrad 100 mit Raddurchmesser von 720 mm (28 Zoll) z.B. ca. 840 mm. In der Horizontalebene (d.h. in der Ebene des Standfläche) ergeben sich die Gesamtabmessungen im Wesentlichen aus dem gegenseitigen Abstand der beiden Räder 7, 8 und aus dem Überstand gewisser Komponenten und Abschnitte des Lenkers 9, der Gabel 6 und der Radnaben der Räder 7, 8. Die Breite ist mit ca. 740 mm nur unwesentlich größer als der Raddurchmesser. Die Tiefe T1 (siehe Fig. 16) beträgt bei einem solchen Faltrad 100 ca. 290 mm.

## Patentansprüche

1. Faltrad (100) mit einer Vorderradgabel (6) mit Vorderrad (7), einem Rahmen, der eine obere Rahmenbasis (1), eine untere Rahmenbasis (2), ein Oberrohr (4) und eine Sitzstrebe (5) umfasst, die ein geschlossenes Polygon bilden, und der ein Sitzrohr (3) umfasst, das sich diagonal ausgehend von der untere Rahmenbasis (2) durch das Polygon hindurch nach oben erstreckt, wobei ein Sattel (3.3) an einem oberen Ende des Sitzrohrs (3) und ein Hinterrad (8) im Bereich eines rückwärtigen Endes der unteren Rahmenbasis (2) befestigt ist, **dadurch gekennzeichnet, dass** im Bereich des Rahmens vier gelenkige Verbindungen vorgesehen sind, die einen zweistufigen Faltvorgang ermöglichen, bei dem in einem ersten Vorgang die obere Rahmenbasis (1) und das Oberrohr (4), sowie die untere Rahmenbasis (2) und die Sitzstrebe (5) zusammenführbar sind, und bei dem in einem zweiten Vorgang die untere Rahmenbasis (2) zusammen mit der Sitzstrebe (5) so umlegbar sind, dass das Hinterrad (8) eine Position neben dem Vorderrad (7) einnimmt.

2. Faltrad (100) nach Anspruch 1, **dadurch gekennzeichnet, dass** sich während des Faltvorgangs das Sitzrohr (3) entlang des Oberrohrs (4) verschiebt.

3. Faltrad (100) nach Anspruch 2, **dadurch gekennzeichnet, dass** das Sitzrohr (3) so umklappbar ist, das es im gefalteten Zustand des Faltrads (100) neben der oberen Rahmenbasis (1) und dem Oberrohr (4) liegt.

4. Faltrad (100) nach Anspruch 1, 2 oder 3, **dadurch gekennzeichnet, dass** im Bereich eines ersten Gelenks (11) der vier Gelenke ein Verbindungselement (4.4) eine lösbare Verbindung zwischen dem Oberrohr (4) und dem Sitzrohr (3) bildet, wobei diese Verbindung vorzugsweise durch das Öffnen eines Klemmverschlusses (3.2) lösbar ist.

5. Faltrad (100) nach Anspruch 4, **dadurch gekennzeichnet, dass** das erste Gelenk (11) ein Kugelgelenk (11), bestehend aus einer fest in dem Verbindungselement (4.4) integrierten inneren Kugel (11.1) und einer beweglichen äußeren Pfanne (11.2) ist.

6. Faltrad (100) nach Anspruch 4 oder 5, **dadurch gekennzeichnet, dass** das erste Gelenk (11) ein Kugelgelenk (11) ist, das eine Verbindung zwischen dem Oberrohr (4) und der Sitzstrebe (5) bildet.

7. Faltrad (100) nach einem der vorhergehenden Ansprüche, **dadurch gekennzeichnet, dass** ein zweites Gelenk (10) der vier Gelenke als zentrales Gelenk (10) zum Verbinden der oberen Rahmenbasis (1) und der unteren Rahmenbasis (2) dient.

8. Faltrad (100) nach Anspruch 7, **dadurch gekennzeichnet, dass** das zentrale Gelenk (10) in etwa den gleichen Abstand zur Achse (H) des Hinterrads (8) und zur Achse (V) des Vorderrads (7) hat.

9. Faltrad (100) nach Anspruch 7 oder 8, **dadurch gekennzeichnet, dass** das Sitzrohr (3) an seinem unteren Ende über einen Ausleger (3.1) ebenfalls an dem zentralen Gelenk (10) oder an einem zusätzlichen Gelenk in dessen Nähe befestigt ist.

10. Faltrad (100) nach einem der vorhergehenden Ansprüche, **dadurch gekennzeichnet, dass** durch ein drittes Gelenk (4.3) der vier Gelenke das Oberrohr (4) gelenkig an einem Abschnitt der oberen Rahmenbasis (1) gelenkig befestigt ist.

11. Faltrad (100) nach einem der vorhergehenden Ansprüche, **dadurch gekennzeichnet, dass** es sich bei der Sitzstrebe (5) um eine gabelförmige oder zweiteilige Sitzstrebe (5) handelt und dass zwei Gelenke (5.1, 5.2) zusammen das vierte Gelenk (5.1, 5.2) der vier Gelenke bilden.

12. Faltrad (100) nach Anspruch 11, **dadurch gekennzeichnet, dass** die Sitzstrebe (5) an ihren beiden unteren Enden über die beiden Gelenke (5.1, 5.2) mit einer Kettenstrebe (2.3), die Teil der Rahmenbasis (2) ist, verbunden ist.

13. Faltrad (100) nach einem der vorhergehenden Ansprüche, **dadurch gekennzeichnet, dass** es einen zusammenfaltbaren Lenker (9) umfasst.
